# EUROPÄISCHE PATENTSCHRIFT

(11) **EP 2 061 841 B1**
(45) Veröffentlichungstag und Bekanntmachung des Hinweises auf die Patenterteilung: **17.08.2011**
(21) Anmeldenummer: 07819989.0
(22) Anmeldetag: 30.08.2007
(51) Int. Cl.: C08L 83/08, C09J 183/08

(54) **SILICONZUSAMMENSETZUNG**
SILICONE COMPOSITION
COMPOSITION DE SILICONE

(30) Priorität: 30.08.2006 EP 06119744
(43) Veröffentlichungstag der Anmeldung: 27.05.2009
(73) Patentinhaber: SIKA TECHNOLOGY AG, CH-6340 Baar (CH)
(72) Erfinder: BANKWITZ, Uwe, CH-8162 Steinmaur (CH); KRANJCEVIC, Boris, CH-6010 Kriens (CH); DJURDJEVIC, Alexander, CH-8048 Zürich (CH); BIANCHI, Davide, 20138 Milano (IT)
(74) Vertreter: Sika Patent Attorneys
(86) Internationale Anmeldenummer: PCT/EP2007/059022
(87) Internationale Veröffentlichungsnummer: WO 2008/025812

(56) Entgegenhaltungen:
- EP-A1- 1 031 611
- US-B1- 6 545 104

## Beschreibung

### Technisches Gebiet

Die vorliegende Erfindung betrifft das Gebiet der Siliconzusammensetzungen.

### Stand der Technik

Silicone sind bekannte Zusammensetzungen, welche schon lange als Dichtstoffe eingesetzt werden. Einkomponentige Silicone sind feuchtigkeitsreaktiv und härten unter dem Einfluss von Wasser aus. Es ist Stand der Technik, dass derartige Siliconzusammensetzungen aus Polydiorganosilioxanen und einem Vernetzer aufgebaut sind.

Je nach Abgangsgruppe und Species, welche bei der Aushärtung frei wird, wird zwischen sauer oder neutral vernetzenden Siliconzusammensetzungen unterschieden.

Sauer vernetzende Siliconzusammensetzungen weisen beispielsweise Acyloxysilan-Gruppen auf, welche bei der Vernetzung Carbonsäuren abspalten. Nachteilig bei diesen sauer vernetzenden Systemen ist jedoch, dass der Geruch der bei der Vernetzung gebildeten Carbonsäure vielfach als störend empfunden wird. EP-A-1 342 742 beschreibt eine Polysiloxanmasse, welche Acyloxysilangruppen terminierte Polysiloxane sowie einen Alkoxysilanvernetzer aufweisen. Derartige sauer vernetzende Siliconzusammensetzungen sind jedoch nachteilig, da neben dem störenden Geruch die gebildete Carbonsäure bei Verwendung auf bestimmten Untergründen, wie beispielsweise Metallen oder Beton zu Problemen führen kann. Weiterhin weisen derartige Siliconzusammensetzungen auch Probleme in der Lagerstabilität auf.

Neutral vernetzende Siliconzusammensetzungen weisen beispielsweise Alkoxysilan- oder Ketoximosilan-Gruppen auf.

Alkoxysilan basierende Siliconzusammensetzungen weisen den grossen Nachteil auf, dass sie eine verkürzte Lagerstabilität und gewisse Schwächen in der Haftung auf verschieden Untergründen aufweisen.

Beispielsweise beschreibt EP-A-384 609 ein Hydroxylterminiertes Polysiloxan, welches mit Alkoxy- oder Alkoxyalkoxy-Silanen vernetzt wird und direkt compoundiert wird. Eine derartige Siliconzusammensetzung weist jedoch einige Nachteile auf, beispielsweise dass die Hydrolyse von Alkoxysilangruppen relativ langsam und im Vergleich zu Oxim-vernetzenden Siliconzusammensetzungen eine geringere Durchhärtungsgeschwindigkeit, geringere Lagerstabilität und Schwächen in der Haftung aufweisen.

EP-A-0 543 615 beschreibt Siliconzusammensetzungen, welche hydroxylterminiertes Polysiloxan und als Vernetzer Ketoximo-Silane aufweisen und direkt compoundiert werden. Derartige Siliconzusammensetzungen weisen jedoch zwar verbesserte Lagerstabilität und Haftung auf, weisen aber einen sehr starken Geruch auf, welcher durch den intensiven Geruch des bei der Vernetzung gebildeten Ketoxims verursacht wird. Die grosse Menge der gebildeten Ketoxime ist auch dahin gehend nachteilig, dass die Ketoxime, insbesondere das häufig anzutreffende Methylethylketoxim (MEKO), als gesundheitsgefährdend betrachtet werden und demzufolge, dass derartige Siliconzusammensetzungen gemäss den geltenden Vorschriften in der Europäischen Union (EU) als "Xn" eingestuft werden und mit dem Gefahrensatz "R40" (Verdacht auf krebserzeugende Wirkung) zu kennzeichnen sind.

Die Verwendung von Alkoxyterminierten Polysiloxanen in Kombination mit Alkoxysilanvernetzern ist beispielsweise in DE-C-195 07 416 beschrieben. Hier wird aufgrund der Zugabe von Phosphorverbindungen die schlechte Haftung und Lagerstabilität von rein Alkoxyterminierten Polysiloxanen verbessert. Die Verbesserung ist aber nur von geringem Ausmass und immer noch bedeutend schlechter als die ketoxim-vernetzenden Zusammensetzungen. Zudem weisen sie vielfach grosse Probleme in der Durchhärtung aus, was vor allem bei dickschichtigen Anwendungen als grosser Nachteil gewertet werden muss.

### Darstellung der Erfindung

Aufgabe der vorliegenden Erfindung ist es daher, die Nachteile des Standes der Technik zu überwinden und insbesondere eine neutral vernetzende Siliconzusammensetzung zur Verfügung zu stellen, welche einen geringen Geruch in Kombination mit guter Haftung und gute Lagerstabilität aufweist.

Überraschenderweise konnte dies mit einer Siliconzusammensetzung gemäss Anspruch 1 erreicht werden.

Zur Herstellung der Siliconzusammensetzungen werden keine aufwändigen Reaktionsbedingungen und/oder Apparate benötigt. So lassen sich insbesondere die ketoximosilan-termierten Polydiorganosiloxane sehr einfach durch eine schnelle chemische Reaktion bei Raumtemperatur herstellen. Diese einfache und schnelle Herstellung stellen deshalb grosse ökonomische und ökologische Vorteile dar.

Insbesondere hat sich gezeigt, dass in einer Ausführungsform der Erfindung das ketoximosilan-termierte Polydiorganosiloxan in situ gebildet werden kann und somit eine sehr effiziente Methode der Herstellung darstellt.

Erstaunlicherweise ist trotz der Ketoximosilangruppen in der Siliconzusammensetzung der Geruch sowohl bei der Applikation als auch der Aushärtung verglichen mit rein Alkoxysilan-basierenden, d.h. Ketoximsilangruppenfreien, Siliconzusammensetzungen nur geringfügig verschlechtert. Gleichzeitig zeigen diese Siliconzusammensetzungen eine ausgezeichnete Lagerstabilität und Haftung auf, welche vergleichbar ist mit den bekannten rein oxim-vernetzenden Siliconzusammensetzungen ist, ohne aber deren Nachteile der grossen Menge von den bei der Reaktion entstehenden Ketoximen aufzuweisen. Somit sind Siliconzusammensetzungen ermöglicht, welche ökologisch und gesundheitstechnisch grosse Vorteile aufweisen.

### Wege zur Ausführung der Erfindung

Die vorliegende Erfindung betrifft Siliconzusammensetzungen. Die Siliconzusammensetzung enthält
(a) mindestens ein ketoximosilanterminiertes Polydiorganosiloxan der allgemeinen Formel (I) 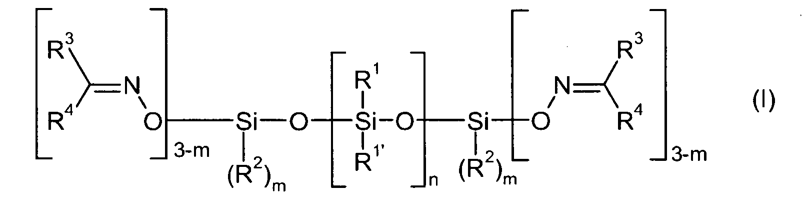 wobei
   R¹ und R^{1'} unabhängig voneinander für einen, gegebenenfalls substituierten, Alkyl- oder Alkenyl- oder Arylrest, bevorzugt Methyl, steht;
   R² unabhängig voneinander für einen, gegebenenfalls substituierten, Alkyl- oder Alkenyl- oder Arylrest, steht;
   R³ und R⁴ unabhängig voneinander für einen Alkylrest stehen;
   n für Werte von 20 bis 3000, bevorzugt für Werte von 100 bis 1600, steht
   und m entweder 0 oder 1 ist;
   und
(b) mindestens ein Alkoxysilan der allgemeinen Formel (II)

   (R⁵)ₚSi(OR⁶)₄₋ₚ (II)

   wobei
   R⁵ unabhängig voneinander für einen, gegebenenfalls substituierten, Alkyl- oder Alkenyl- oder Arylrest, oder einen Rest der Formel -(R⁷-O)_{q}-R⁸, bevorzugt Vinyl oder Methyl, steht;
   R⁶ unabhängig voneinander für H oder für einen Alkylrest steht,
   R⁷ für ein Alkylen, insbesondere für ein C₂- bis C₄-Alkylen;
   R⁸ für einen Alkylrest steht,
   und p entweder 0 oder 1 ist und q für einen Wert zwischen 1 und 5 steht.
   R¹ und R^{1'} stehen insbesondere für Methyl, Ethyl, Propyl, Vinyl, Allyl, Trifluoromethyl oder Phenyl. Es ist bevorzugt, dass die Reste R¹ und R^{1'} identisch sind. Vorzugsweise handelt es sich hierbei jeweils um Methylgruppen.
   R² stehen insbesondere für Phenyl, Vinyl oder Methyl. Bevorzugt steht R² für Methyl oder Vinyl.

Die Alkylreste, für welche für R³ und R⁴ stehen, sind vorzugsweise unverzweigt oder verzweigte C₁- bis C₆- Alkylreste. Bevorzugt stehen R³ und R⁴ für Methyl, Ethyl, n-Propyl, iso-Propyl, n-Butyl oder iso-Butyl. Besonders bevorzugt sind diejenigen Fälle, in denen R³ für Methyl und R⁴ für Methyl, Ethyl oder iso-Butyl stehen. Meist bevorzugt steht R³ für Methyl und R⁴ für Ethyl.

In Formel (I) steht m entweder für 0 oder 1. Somit weist die Formel (I) 4 bis 6 Ketoximo-Gruppen auf. Ist m > 1 werden die mechanischen Eigenschaften der ausgehärteten Siliconzusammensetzungen derart stark negativ beeinflusst, dass sie für die Anwendung als Dichtstoff und/oder Klebstoff ungeeignet sind. Als besonders bevorzugt gilt, wenn m für den Wert von 0 steht.

Das Molekulargewicht (Mₙ) des ketoximosilanterminierten Polydiorganosiloxans der allgemeinen Formel (I) beträgt vorzugsweise zwischen 2'000 und 200'000 g/mol, insbesondere zwischen 10'000 und 100'000 g/mol.

Die ketoximosilanterminierten Polydiorganosiloxane der allgemeinen Formel (I) sind insbesondere erhältlich durch die Umsetzung mindestens eines hydroxyterminierten Polydiorganosiloxans der allgemeinen Formel (III) 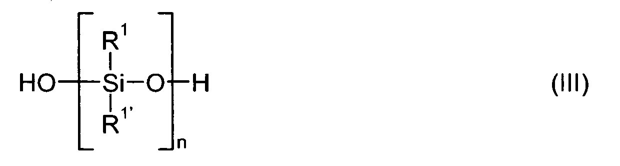 mit mindestens einem Ketoximosilan der allgemeinen Formel (IV)

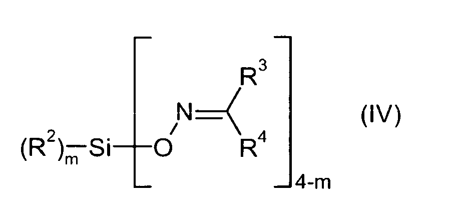

Hydroxyterminierte Polydiorganosiloxane der Formel (III) sind bekannt und breit erhältlich. Diese Verbindungen der Formel (III) weisen bei 25°C vorzugsweise eine Viskosität zwischen 100 und 500'000 mPas, insbesondere zwischen 1'000 und 350'000 mPas, bevorzugt zwischen 5'000 und 100'000 mPas, aufweist. Deren Herstellung erfolgt in bekannter Art und Weise, wie sie beispielsweise in EP-A-0 384 609 erwähnt sind.

Die Ketoximosilane der allgemeinen Formel (IV) lassen sich beispielsweise aus den entsprechenden Ketoximen OH-N=C(R³)(R⁴) und den Alkoxysilanen (R²)ₘ-Si-(OCH₃)₄₋ₘ oder den Chlorosilanen (R₂)ₘ-Si-(Cl)₄₋ₘ herstellen, wie dies beispielsweise in DE-A-41 41 552 offenbart wird. Bevorzugt sind Methyltris(methyl-ethyl-ketoximo)silan, Phenyltris(methyl-ethyl-ketoximo)silan, Vinyltris(methyl-ethyl-ketoximo)silan oder Methyltris(isobutyl-ketoximo)silan. Insbesondere bevorzugt sind Methyltris(methyl-ethyl-ketoximo)silan, Vinyltris-(methyl-ethyl-ketoximo)silan und Methyltris(isobutyl-ketoximo)silan. Derartige Ketoximosilane sind vielfach kommerziell erhältlich, zum Beispiel von ABCR GmbH & Co, Deutschland oder von Hanse-Chemie, Deutschland.

Die Umsetzung des hydroxyterminierten Polydiorganosiloxans der Formel (III) mit dem Ketoximosilan der Formel (IV) erfolgt typischerweise bei Raumtemperatur, insbesondere in einem stöchiometrischen Überschuss des Ketoximosilans. Bevorzugt wird ein 3- bis 5-facher molarer Überschuss des Ketoximosilans der Formel (IV) verwendet. Die Bestimmung des Endes dieser Umsetzungsreaktion kann über einen "Titanal"-Test erfolgen. Hierbei wird eine Probe genommen und mit Tetrapropoxytitanat versetzt. Die Bildung eines Gels zeigt, dass noch Silanole vorhanden sind und damit die Reaktion noch nicht abgeschlossen ist. Es kann von Vorteil sein, dass das hydroxyterminierte Polydiorganosiloxan der Formel (III) in einem Weichmacher oder Verdünner vorliegt. In einer Ausführungsform ist ein derartiger Weichmacher oder Verdünner ein Siliconöl, insbesondere ein Trimethylsilyl-terminiertes Polydiorganosiloxan. Die Verwendung von derartigen Weichmachern oder Verdünnern ist vor allem für höher viskose hydroxyterminierte Polydiorganosiloxane, insbesondere mit Werten für n von über 1000, vor allem von über 2000, von Vorteil.

Es ist bevorzugt, dass diese Umsetzung in kurzer Zeit erfolgt. Die Geschwindigkeit dieser Umsetzung ist abhängig von R² und nimmt von Methyl über Phenyl zu Vinyl hin zu.

Die ketoximosilanterminierten Polydiorganosiloxane der allgemeinen Formel (I) können direkt nach deren Herstellung für die Herstellung der Siliconzusammensetzung verwendet werden oder bis zu ihrer Verwendung gelagert werden. Die ketoximosilanterminierten Polydiorganosiloxane der allgemeinen Formel (I) sind nämlich unter Ausschluss von Feuchtigkeit und bei Lagerung bei Raumtemperatur über eine lange Zeit stabil. Es wurde jedoch festgestellt, dass die Lagerstabilität aber auch abhängig von R² ist. Diese nimmt in der Reihenfolge Methyl > Phenyl > Vinyl zu. Die Auswahl von R² = Methyl ist insbesondere aus Verfügbarkeit und Kostengründen sehr vorteilhaft, ohne dass die Lagerstabilität für die meisten Anwendungen ungenügend wäre.

Die Siliconzusammensetzungen enthält mindestens ein Alkoxysilan der allgemeinen Formel (II)

(R⁵)ₚSi(OR⁶)₄₋ₚ (II)

Geeignete Alkoxysilan sind Trialkoxysilane und Tetraalkoxysilane. Dialkoxysilane und Monoalkoxysilane sind ungeeignet, da sie bei der Aushärtung der entsprechenden Zusammensetzung nicht oder zuwenig vernetzen und somit für die Verwendung als Dichtstoff und/oder Klebstoff zu ungenügender Mechanik führen.

Als R⁵ eignen sich insbesondere C₁- bis C₆-Alkylreste, insbesondere Methyl und Ethyl, Vinyl oder Phenyl.

Es ist vorteilhaft, wenn das Alkoxysilan der Formel (II) eine hohe Reaktivität aufweist. Aus diesem Grund ist Methyl gegenüber Ethyl als R⁶ bevorzugt. Ausserdem ist aus diesem Grund auch Vinyl gegenüber Methyl bevorzugt. Im Falle von Tetraalkoxysilanen ist das Tetraethoxysilan gegenüber Tetramethoxysilan aus toxikologischen Gründen bevorzugt. Die kleinere Reaktivität stellt hierbei aufgrund der höheren Funktionalität ebenfalls kein Problem dar.

Besonders bevorzugt handelt es sich beim Alkoxysilan der Formel (II) um Vinyltrimethoxysilan oder Tetraethoxysilan oder eine Mischung davon.

Die Alkoxysilane können auch bereits hydrolysiert (alle R⁶ = H) oder teilhydrolysiert sein (ein Teil aller R⁶ = H) vorliegen. Bereits (teil)hydrolysierte Alkoxysilane sind sehr reaktiv und es kann demzufolge unter Umständen von grossem Vorteil sein, derartige Alkoxysilane zu verwenden. Es ist dem Fachmann auch klar, dass auch Siloxan-Oligomere, insbesondere Dimere oder Trimere, welche durch Kondensationen von derartigen Silanol-haltigen (teil)hydrolysierten Alkoxysilanen unter Bildung von Siloxan-Bindung (Si-O-Si) gebildet werden können, zum Einsatz kommen können.

Die Siliconzusammensetzung kann gegebenenfalls noch weitere Bestandteile enthalten.

Derartige zusätzliche Bestandteile sind Weichmacher, Katalysatoren, anorganische und/oder organische Füllstoffe, Härtungsbeschleuniger, Pigmente, Haftvermittler, Verarbeitungshilfsmittel, Rheologieregler, Farbstoffe, Inhibitoren, Hitzestabilisatoren, Antistatika, Flammschutzmittel, Biozide, Wachse, Verlaufsmittel, Thixotropiermittel und weitere dem Fachmann bekannte gängige Rohstoffe und Additive. Vorzugsweise enthält die Siliconzusammensetzung neben mindestens einem ketoximosilanterminierten Polydiorganosiloxan der allgemeinen Formel (I) und mindestens einem Alkoxysilan der allgemeinen Formel (II) zusätzlich mindestens einen Weichmacher, mindestens einen Katalysator und mindestens einen Füllstoff.

Als Weichmacher sind besonders trialkylsilylterminierte Polydialkylsiloxane geeignet, insbesondere trimethylsilylterminierte Polydimethylsiloxane. Bevorzugt werden trimethylsilylterminierte Polydimethylsiloxane mit Viskositäten zwischen 0.01 und 10 Pas. Besonders bevorzugt sind Viskositäten zwischen 0.1 und 1 Pas. Es können jedoch auch trimethylsilylterminierte Polydimethylsiloxane eingesetzt werden, bei denen einige der Methylgruppen durch andere organische Gruppen wie zum Beispiel Phenyl, Vinyl oder Trifluorpropyl ersetzt sind. Obwohl besonders bevorzugt lineare trimethylsilylterminierte Polydimethylsiloxane als Weichmacher eingesetzt werden, können auch solche Verbindungen verwendet werden, die verzweigt sind, die dadurch entstehen, dass in den zur Herstellung der Weichmacher dienenden Ausgangsprodukten kleine Mengen tri- oder tetrafunktioneller Silane verwendet werden. Es ist aber auch möglich anstatt der Polysiloxan-Weichmacher bis zu typischerweise 25 Gew.-%, bezogen auf das Gesamtgewicht der Siliconzusammensetzung, andere organische Verbindungen, wie z. B. bestimmte Kohlenwasserstoffe oder -gemische, als Weichmacher einzusetzen. Derartige Kohlenwasserstoffe können aromatisch oder aliphatisch sein. Bei der Auswahl ist vorteilhaft darauf zu achten, dass diese Kohlenwasserstoffe eine geringe Flüchtigkeit und eine hinreichende Verträglichkeit mit den ketoximosilanterminierten Polysiloxanen aufweisen.

Um eine genügend hohe Vernetzungsgeschwindigkeit zu erreichen werden vorzugsweise Katalysatoren eingesetzt, insbesondere in einer Menge von 0.01 bis 5 Gew.-%, bezogen auf das Gesamtgewicht der Siliconzusammensetzung. Üblich sind zinnorganische Verbindungen, vorzugsweise Dialkylzinnverbindungen, wie z. B. Dibutylzinndilaurat oder -diacetat, bzw. Titanverbindungen, wie Tetrabutyl- oder Tetraisopropyltitanat, oder Titanchelate. Es können auch Katalysatorgemische eingesetzt werden.

Zur Erzielung bestimmter mechanischer Eigenschaften können aktive oder inaktive Füllstoffe eingesetzt werden. Bevorzugte Füllstoffe mit hoher spezifischer Oberfläche sind pyrogene Kieselsäure oder gefälltes oder beschichtetes, insbesondere mit Stearinsäure beschichtetes, Calciumcarbonat. Darüber hinaus können Füllstoffe mit geringer spezifischer Oberfläche als Extender verwendet werden. Bei aktiven Füllstoffen treten chemische oder physikalische Wechselwirkungen mit dem Polymer auf, bei inaktiven Füllstoffen treten diese nicht oder nur im untergeordneten Umfang auf. Insbesondere werden Calciumcarbonate, Aluminiumsilicate, Quarzmehl, Diatomeenerde, Eisenoxide etc. eingesetzt. Bevorzugt ist hierbei gemahlenes Calciumcarbonat. In einer besonders bevorzugten Ausführungsform enthält die Siliconzusammensetzung pyrogene Kieselsäure als Füllstoff. In einer besonders bevorzugten Ausführungsform werden Mischungen von pyrogener Kieselsäure und Calciumcarbonat als Füllstoff eingesetzt.

Besonders geeignet als Haftvermittler sind Alkoxysilane, welche vorzugsweise mit funktionellen Gruppen substituiert sind. Die funktionelle Gruppe ist beispielsweise eine Aminopropyl-, Glycidoxypropyl- oder Mercaptopropylgruppe. Bevorzugt sind aminofunktionelle Gruppen. Bei der Alkoxygruppe des Silans handelt es sich meist um eine Methoxy- oder Ethoxygruppe. Besonders bevorzugt sind Aminopropyltrimethoxysilan, 3-Aminopropyltriethoxysilan, 3-(2-Aminoethyl)-aminopropyltriethoxysilan und 3-Mercaptopropyltriethoxysilan. Es ist auch möglich, ein Gemisch von Haftvermittlern einzusetzen. Der Anteil von derartigen Haftvermittlern beträgt insbesondere zwischen 0.1 und 5 Gew.-%, insbesondere zwischen 0.5 und 2 Gew.-%, bezogen auf das Gesamtgewicht der unausgehärteten Siliconzusammensetzung.

Es ist dem Fachmann klar, dass bei der Verwendung von Silanen stets auch die Möglichkeit besteht, dass je nach Feuchtigkeit und Bedingungen, auch weitere Siloxane in der Siliconzusammensetzung vorhanden sein können. So können sich zum Beispiel aus (teil)hydrolysierten Alkoxysilan- oder ketoximosilan-Komponenten durch Kondensationsreaktionen Siloxane bilden, was zu oligomeren Siloxanen, insbesondere zu dimeren oder trimeren Siloxanen führen kann. Es sind nicht nur lineare, sondern auch verzweigte und cyclische oligomere Siloxane möglich. Üblicherweise ist es jedoch von grossem Vorteil, wenn die Menge dieser oligomeren Siloxane ein gewisses Mass nicht überschreitet.

Der Gehalt an ketoximosilanterminierten Polydiorganosiloxan der allgemeinen Formel (I) ist für Siliconzusammensetzungen ohne Füllstoffe vorzugsweise zwischen 99 und 50 Gew.-%, insbesondere zwischen 95 und 60 Gew.-%, und für Siliconzusammensetzungen mit Füllstoffen zwischen 97 und 10 Gew.-% insbesondere zwischen 90 und 25 Gew.-%, jeweils bezogen auf das Gesamtgewicht der unausgehärteten Siliconzusammensetzung.

Der Gehalt an Alkoxysilanen der allgemeinen Formel (II) beträgt vorzugsweise zwischen 0.5 und 10 Gew.-%, insbesondere zwischen 1 und 5 Gew.-%, bezogen auf das Gewicht des ketoximosilanterminierten Polydiorganosiloxans der allgemeinen Formel (I).

Falls die Siliconzusammensetzung einen Füllstoff enthält, ist die Menge aller Füllstoffe vorteilhaft zwischen 5 und 70 Gew.-%, insbesondere zwischen 10 und 55 Gew.-%, bezogen auf das Gesamtgewicht der unausgehärteten Siliconzusammensetzung.

Die Herstellung der Siliconzusammensetzung kann kontinuierlich oder diskontinuierlich nach den dem Fachmann bekannten Verfahren und unter Verwendung von bekannten Apparaturen erfolgen. Um ungewollte Vernetzungen zu erhalten sollte darauf geachtet werden, dass die eingesetzten Rohstoffe, sowie Apparaturen, vor der Verwendung möglichst getrocknet werden, optimal frei von Wasser sind, und die Herstellung unter Vakuum oder Inertgas, wie beispielsweise Stickstoff, erfolgt.

In einer Ausführungsform der Erfindung wird das Ketoximosilanterminierte Polysiloxan in situ hergestellt. Hierbei kann auch eine Mischung von Ketoximosilan der Formel (IV) und Alkoxysilan der Formel (II) zum Hydroxyterminierte Polysiloxan der Formel (III) bei Raumtemperatur zugegeben werden. Aufgrund der Reaktionsbedingungen und Reaktivitäten wird insbesondere das ketoximosilan-terminierte Polysiloxan der Formel (I) gebildet. Die in situ Herstellung ist sehr vorteilhaft, weil sie sehr schnell, einfach und billig durchgeführt werden kann und keine speziellen Apparaturen oder Reaktionsbedingungen oder zusätzliche Katalysatoren benötigt.

Nach der Herstellung der Siliconzusammensetzung kann sie in Fässer, Hobbocks, Beutel oder Kartuschen abgefüllt werden. Die Behälter sind vorteilhaft trocken und sind insbesondere aus Materialien gefertigt, welche einen hohen Diffusionswiderstand gegen Wasser und Wasserdampf aufweisen. Dicht verschlossen sind derartige Siliconzusammensetzungen lagerstabil, das heisst, dass sie über einen Zeitraum von typischerweise mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Veränderung der Hautbildungszeit als Mass für die Lagerstabilität herangezogen.

Die Siliconzusammensetzung ist feuchtigkeitshärtend. Die Ketoximosilan-Gruppen des ketoximosilanterminierten Polydiorganosiloxans der allgemeinen Formel (I) und die Alkoxysilangruppen des Alkoxysilans der allgemeinen Formel (II) reagieren mit Wasser, indem sie zu Silanolgruppen (Si-OH) hydrolysieren. Die gebildeten Silanolgruppen kondensieren ihrerseits zu Siloxangruppen (Si-O-Si), wodurch aufgrund der Funktionalität der eingesetzten Inhaltsstoffe die Zusammensetzung eine Vernetzung erfolgt. Das Alkoxysilan der Formel (II) wirkt hierbei als Vernetzer.

Das hierfür benötigte Wasser ist insbesondere Feuchtigkeit, vor allem in der Form von Luftfeuchtigkeit.

Eine derartige Siliconzusammensetzung wird auch als RTV-1 Siliconkautschuk (einkomponentiger kaltvulkanisierender (engl.: room temperature vulcanizing, RTV) Siliconkautschuk) bezeichnet.

Als besonders bevorzugt hat sich das Einkomponentensystem (RTV-1) erwiesen, bei welchem der Silicondichtstoff und/oder Siliconklebstoff bei Raumtemperatur unter dem Einfluss von Feuchtigkeit, insbesondere von Luftfeuchtigkeit, polymerisiert, wobei die Vernetzung durch Kondensation von SiOH-Gruppen unter Bildung von Si-O-Si-Bindungen erfolgt.

Es hat sich hierbei gezeigt, dass die Siliconzusammensetzungen einen grossen Vorteil in gesundheitstechnischer und ökologischer Hinsicht aufweisen, indem sie sehr wenig freies Ketoxime (< 1 %) aufweisen. Dies führt dazu, dass es möglich wird, kennzeichnungsvorteilhafte Siliconzusammensetzungen zu formulieren, die aber dennoch die Vorteile der Ketoximosilan-Systeme aufweisen.

Geeignete Methoden zum Auftragen der Siliconzusammensetzung sind beispielsweise die Applikation aus handelsüblichen Kartuschen, welche für kleinere Anwendungen bevorzugt manuell betrieben werden. Eine Applikation mittels Druckluft aus einer handelsüblichen Kartusche oder aus einem Fass oder Hobbock mittels einer Förderpumpe oder eines Extruders, gegebenenfalls mittels eines Applikations-Roboters, ist ebenfalls möglich. Derartige Applikationsarten werden insbesondere in Anwendungen der industriellen Fertigung oder bei grossen Applikationen bevorzugt.

Die Siliconzusammensetzung findet insbesondere als Dichtstoff und/oder Klebstoff Verwendung.

Ein weiterer Aspekt der Erfindung betrifft ein Verfahren zum Abdichten. Es umfasst die folgenden Schritte:
- Applikation einer Siliconzusammensetzung, wie sie vorgängig beschrieben worden sind, zwischen ein Substrat **S1** und ein Substrat **S2,**
- Aushärtung der Siliconzusammensetzung durch Kontakt mit Feuchtigkeit.

Die Substrate **S1** und **S2** sind hierbei gleich oder verschieden voneinander.

Die Siliconzusammensetzungen zeichnen sich durch ein sehr breites Spektrum von Substraten **S1** bzw. **S2** aus, für die sie als Dichtstoff geeignet sind. Insbesondere ist mindestens eines der Substrate **S1** oder **S2** Glas, Glaskeramik, Beton, Mörtel, Backstein, Ziegel, Keramik, Gips, ein Naturstein wie Granit oder Marmor; ein Metall oder eine Legierung wie Aluminium, Stahl, Buntmetall, verzinktes Metall; ein Holz, ein Kunststoff wie PVC, Polycarbonat, PMMA, Polyester, Epoxidharz; eine Pulverbeschichtung, Emaille, eine Farbe oder ein Lack, insbesondere ein Automobillack.

Die Siliconzusammensetzung findet insbesondere in der industriellen Fertigung, insbesondere von Fahrzeugen und Gebrauchsgegenständen des täglichen Gebrauchs, sowie im Bauwesen, insbesondere im Tief- und Hochbau, Anwendung.

Artikel, welche ausgehärtete Siliconzusammensetzungen, wie sie vorgängig beschreiben worden sind, sind deshalb vor allem ein Bauwerk, ein Industriegut oder ein Transportmittel, insbesondere ein Gebäude, oder ein Teil davon.

Eine beispielhafte Aufzählung derartiger Artikel sind Häuser, Glasfassaden, Fenster, Bäder, Badezimmer, Küchen, Dächer, Brücken, Tunnels, Strassen, Automobile, Lastkraftwagen, Schienenfahrzeuge, Busse, Schiffe, Spiegel, Scheiben, Wannen, Weisswaren, Haushaltsapparate, Geschirrspühler, Waschmaschinen.

### Beispiele

### Herstellung von ketoximosilanterminierten Polydiorganosiloxanen

100 Massenteile Polymer FD-20 (Wacker Chemie, Deutschland) (α,ω-Dihydroxy-terminiertes Polydimethylsiloxan, Viskosität 20 Pas (25°C)) ("*DHPS*") wurden in einem Planetenmischer unter Stickstoff bei 25°C während 15 Minuten mit 5.8 Massenteilen Vinyl-tris(methyl-ethyl-ketoximo)silan verrührt. Der "Titanal"-Test zeigte, dass keine hydroxyterminierten Polydimethylsiloxane mehr vorhanden waren und die Reaktion vollständig abgelaufen ist. Ebenso sind im IR-Spektrum keine Silanol-Signale (3400 cm⁻¹) mehr detektierbar.

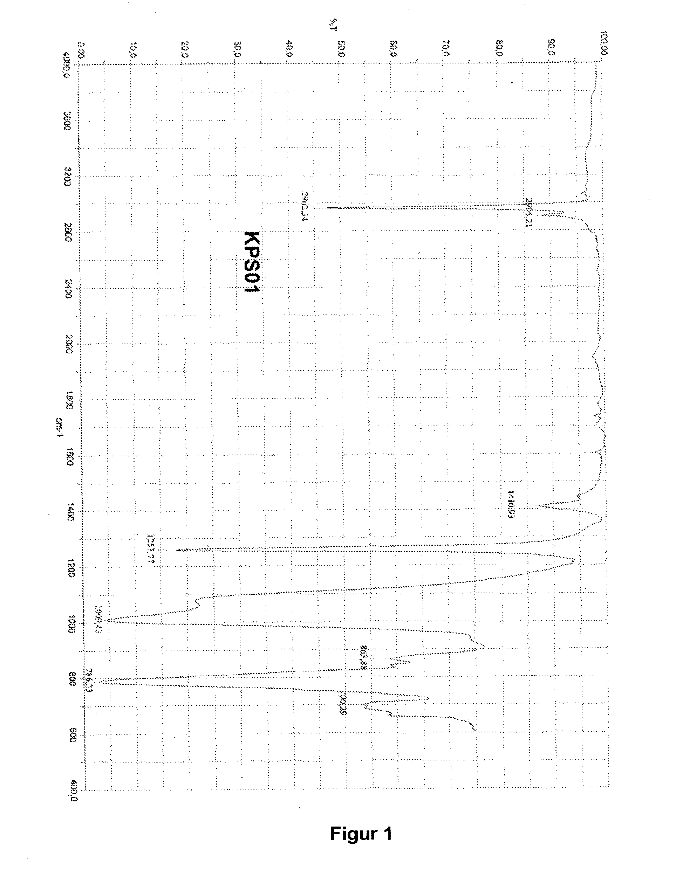

Das gebildete ketoximosilanterminierte Polydiorganosiloxan ***KPS01*** ist eine klare Flüssigkeit. Dessen FTIR-Spektrum ist in Figur 1 gezeigt. Banden-Zuordnung: 2962 cm⁻¹ CH-Valenz, as, CH₃
2905 cm⁻¹ CH-Valenz, sy, CH₃
1411 cm⁻¹ CH-Deformation, as, CH₃
1258 cm⁻¹ CH-Deformation, sy, CH₃
1009 cm⁻¹ Si-O-Valenz, as, Si-O-Si
786 cm⁻¹ Si-C-Valenz, as, Si(CH₃)₂

Die Herstellung des ketoximosilanterminierten Polydiorganosiloxans ***KPS02*** erfolgte in gleicher Weise mit dem Unterschied, dass anstelle des Vinyl-tris(methyl-ethyl-ketoximo)silans 5.8 Massenteile von Methyl-tris(methylethyl-ketoximo)silans verwendet wurden.

### Herstellung von alkoxysilanterminierten Polydiorganosiloxan (APS01)

100 Massenteile Polymer FD-20 (Wacker Chemie, Deutschland) (α,ω-Dihydroxy-terminiertes Polydimethylsiloxan, Viskosität 20 Pas (25°C)) ("*DHPS*") wurden in einem Planetenmischer unter Stickstoff auf 70°C erhitzt. Anschliessend wird langsam ein Gemisch aus 5.8 Massenteilen Vinyltrimethoxysilan und 0.03 Massenteilen Zinkacetylacetonat-Hydrat zugeben und während 1 Stunde bei 60 °C gerührt. Der "Titanal"-Test zeigte, dass keine hydroxyterminierten Polydimethylsiloxane mehr vorhanden waren und die Reaktion vollständig abgelaufen ist.

### Herstellung von Siliconzusammensetzungen

Zu den oben hergestellten 105.8 Massenteilen des ketoximosilanterminierten Polydiorganosiloxan ***KPS01*** bzw. ***KPS02*** wurden die in Tabelle 1 angegebenen Alkoxysilan, sowie anschliessend 10 Massenteile pyrogener Kieselsäure mit einer BET-Oberfläche von 150 m²/g eingemischt und vollständig homogenisiert. Nachdem 15 Minuten unter Vakuum gemischt wurde, gab man 0.05 Massenteile an Dibutylzinn-diacetat ("*DBTDA*") hinzu und mischte weitere 5 Minuten unter Vakuum. Die so erhaltenen Siliconzusammensetzungen ***B1*** bis ***B4*** wurden in feuchtigkeitsdichte Aluminiumkartuschen abgefüllt.

Das Vergleichsbeispiel ***Ref. 1*** wurde analog zu den Zusammensetzungen ***B1*** bis ***B4*** hergestellt mit dem Unterschied, dass zum α,ω-Dihydroxyterminierten Polydimethylsiloxan direkt eine Mischung von Ketoximosilanen ohne Zugabe von Alkoxysilanen gegeben wurde.

Das Vergleichsbeispiel ***Ref. 2*** wurde analog zum Vergleichsbeispiel ***Ref.1*** hergestellt mit dem Unterschied, dass anstelle von Ketoximosilanen Alkoxysilane verwendet wurden. Die Zusammensetzung gelierte jedoch innert kurzer Zeit nach der Zugabe des Katalysators.

Das Vergleichsbeispiel ***Ref. 3*** wurde analog zum Bespiel ***B1*** hergestellt mit dem Unterschied, dass anstelle des Ketoximosilan-terminierten Polysiloxan ***KPS01*** das Alkoxysilan-terminierte Polysiloxan ***APS01*** verwendet wurden.

**Tabelle 1. Siliconzusammensetzungen (Werte sind Massenteile).**

| | ***B1*** | ***B2*** | ***B3*** | ***B4*** | ***Ref.1*** | ***Ref.2*** | ***Ref.3*** |
|---|---|---|---|---|---|---|---|
| ***KPS01*** | 105.8 | 105.8 | 105.8 | | | | |
| ***KPS02*** | | | | 105.8 | | | |
| ***APS01*** | | | | | | | 105.8 |
| *DHPS* | | | | | 100 | 100 | |
| Methyl-tris(methyl-ethyl-ketoximo)silan | | | | | 5.8 | | |
| Vinyl-tris(methyl-ethyl-ketoximo)silan | | | | | 5.8 | | |
| Vinyltrimethoxysilan | 5.8 | | | 5.8 | | 5.8 | 5.8 |
| Tetraethoxysilan | | 5.8 | | | | | |
| Methyltrimethoxysilan | | | 5.8 | | | 5.8 | |
| pyrogene Kieselsäure | 10 | 10 | 10 | 10 | 10 | 10 | 10 |
| *DBTDA* | 0.05 | 0.05 | 0.05 | 0.05 | 0.05 | 0.05 | 0.05 |

### Beschreibung der Prüfmethoden

### Haftung: Raupentest

Zur Prüfung der Haftung wurde die jeweilige Zusammensetzung in Form einer Raupe (150 mm lang, 15 mm breit und 6 mm hoch) aus einer Kartusche auf das jeweilige Substrat (Platte) aufgetragen, welches jeweils zuvor durch Abwischen mit einem mit Sika®Cleaner-205 getränkten Tuch gereinigt und während 5 Minuten abgelüftet wurde. Das mit der Raupe beschichtete Substrat wurde dann während 7 Tagen im Normklima (23±1 °C, 50±5% relative Luftfeuchtigkeit) gelagert, worauf die Haftung geprüft wurde. Zur Prüfung der Haftung wurde die ausgehärtete Raupe jeweils an einem Ende knapp über der Oberfläche des Substrates (Klebefläche) eingeschnitten. Das eingeschnittene Ende der Raupe wurde von Hand festgehalten und dann vorsichtig und langsam, schälend in Richtung des anderen Raupenendes, vom Substrat gezogen. Wenn dabei die Haftung so stark war, dass das Raupenende beim Ziehen abzureissen drohte, wurde mittels eines Cutters ein Schnitt senkrecht zur Raupenziehrichtung bis auf die blanke Oberfläche des Substrates angebracht und die Raupe so ein Stück weit abgelöst. Solche Schnitte wurden, wenn nötig, beim Weiterziehen im Abstand von 2 bis 3 mm wiederholt. Auf diese Weise wurde die gesamte Raupe vom Substrat geschält. Die Bewertung der Hafteigenschaften erfolgte anhand dem nach dem Abziehen der Raupe auf der Substratoberfläche zurückbleibenden ausgehärteten Dichtstoff (Kohäsionsbruch), und zwar durch Abschätzen des kohäsiven Anteils der Haftfläche in Prozent.

Verwendete Substrate:

| | |
|---|---|
| Floatglas | Planilux, von Saint-Gobain Glass, Frankreich |
| Eloxal | Dunkelbronze, von SCHÜCO, Deutschland |
| Edelstahl | Werkstoff-Nr. 1.457, geschliffen mit Korn 180, Thyssen-Krupp Deutschland |
| PVC | RauPren 1406, Ca/Zn-stabilisiert, Rehau, Deutschland |
| Pulverbeschichtetes Aluminium ("*Al_{PB}*") Interpon D2525, bone white, AKZO Italien | |

### Geruch

Die Bewertung des Geruchs erfolgte durch Riechen während der Applikation ("*Gₐₚₚ*") bzw. während des Aushärtens (nach 1 Tag)("*G_{cur}*"). Die Beurteilung des Geruchs erfolgte durch zwei unabhängige Personen nach einer mit einer Skala von 0 (=geruchslos) bis 10 (=extrem störend).

### Hautbildungszeit (Skin Over Time "SOT")

Die Hautbildungszeit wurde wie folgt gemessen. Es wurde aus einer Kartusche nach 1 Tag nach der Herstellung der Zusammensetzung eine Raupe der Siliconzusammensetzung auf eine Polyethylen-Folie appliziert und mittels einer Spachtel zu einer etwa 3 mm dicken Schicht ausgezogen. Die Oberfläche dieser Raupe wurde in regelmässigen Abständen mit dem Finger vorsichtig berührt. Als Hautbildungszeit wurde diejenige Zeitspanne bezeichnet, welche seit der Applikation der Siliconzusammensetzung verstrichen war, bis zu dem Zeitpunkt, an dem keine Siliconzusammensetzung mehr am Finger kleben blieb.

Die Hautbildungszeit nach künstlicher Lagerung ("*SOT_{70°C}*") erfolgte in identischer Weise, ausser dass die Siliconzusammensetzung während 7 Tagen in der Kartusche bei 70°C gelagert wurde und vor dem Applizieren während 1 Tag auf 23 °C abgekühlt wurde.

### Mechanische Eigenschaften

Die Zugfestigkeit ("ZF"), Reissdehnung ("RD") (=Dehnung bei der Maximalkraft) und die Spannung bei 50% Dehnung ("*SP_{50%}*") wurden gemäss DIN 53 504 an S2-Probekörpern, welche 7 Tag bei 23°C, 50% rel. Luftfeuchtigkeit gelagert wurden, mit einer Messgeschwindigkeit von 200 mm/min auf einer Zugmaschine Zwick/Roell Z005 gemessen. Die angegebenen Werte sind die Mittelwerte von 5 Probekörpern. Analog wurde verfahren mit Siliconzusammensetzungen, welche zuvor bei 70°C während 7 Tagen in der Kartusche gelagert wurden. Die so bestimmten mechanischen Eigenschaften weisen in Tabelle 2 den Index "70°C" in ihrer Bezeichnung auf.

### Lagerstabilität

Die Beurteilung der Lagerstabilität erfolgte durch den Vergleich der Hautbildungszeit (SOT) mit der Hautbildungszeit nach Wärmelagerung (*SOT_{70°C}*). Ein Verhältnis von *SOT_{70°C}* / *SOT* ≤ 2 und *SOT_{70°C}* / *SOT* > 0.5 entspricht einer Lagerstabilität bei Raumtemperatur von mindestens 6 Monaten. Derartige Siliconzusammensetzungen werden als "*gut*" beurteilt. Ein Verhältnis von *SOT_{70°C}* / SOT zwischen 2 und 2.5 ist akzeptabel und wird als "*akz.*" beurteilt. Weicht *SOT_{70°C}* um nicht mehr als ±20 % von SOT ab, so ist eine Lagerstabilität von mehr als 6 Monaten bei Raumtemperatur zu erwarten und man beurteilt derartige Siliconzusammensetzungen als "*sehr gut*".

### Ergebnisse

Die Ergebnisse aus Tabelle 2 zeigen, dass die erfindungsgemässen Siliconzusammensetzungen gute Eigenschaften in Bezug auf Haftung und mechanischen Werten aufweisen und dass sie sich durch einen vorteilhaften Geruch auszeichnen.

**Tabelle 2. Prüfergebnisse der Siliconzusammensetzungen.**

| Haftung | ***B1*** | ***B2*** | ***B3*** | ***B4*** | ***Ref.1*** | ***Ref.3*** |
|---|---|---|---|---|---|---|
| Glas | 100 | 100 | 100 | 100 | 100 | 0 |
| Eloxal | 100 | 100 | 100 | 100 | 100 | 0 |
| Edelstahl | 100 | 100 | 100 | 100 | 100 | 0 |
| PVC | 100 | 100 | 100 | 100 | 100 | 0 |
| *Al_{PB}* | 100 | 100 | 100 | 100 | 100 | 0 |
| *SOT* [min] | 30 | 30 | 30 | 35 | 35 | keine Aushärtung |
| *SOT_{70°C}* [min] | 60 | 60 | 55 | 40 | 40 | keine Aushärtung |
| Lagerstabilität | gut | gut | sehr gut | sehr gut | sehr gut | nicht bestimmbar |
| *ZF* [MPa] | 1.50 | 1.90 | 1.70 | 1.54 | 1.54 | nicht bestimmbar |
| *ZF_{70°C}* [MPa] | 1.00 | 0.84 | 1.72 | 1.87 | 1.41 | nicht bestimmbar |
| *RD* [%] | 315 | 426 | 363 | 552 | 666 | nicht bestimmbar |
| *RD_{70°C}* [%] | 526 | 604 | 336 | 371 | 260 | nicht bestimmbar |
| *SP_{50%}*[MPa] | 0.45 | 0.40 | 0.43 | 0.30 | 0.19 | nicht bestimmbar |
| *SP_{70°C 50%}*[MPa] | 0.18 | 0.11 | 0.47 | 0.50 | 0.52 | nicht bestimmbar |
| *Gₐₚₚ* | 3 | 3 | 3 | 3 | 8 | 2 |
| *G_{cur}* | 3 | 3 | 3 | 3 | 8 | nicht bestimmbar |

## Patentansprüche

1. Siliconzusammensetzung enthaltend
(a) mindestens ein ketoximosilanterminiertes Polydiorganosiloxan der allgemeinen Formel (I) 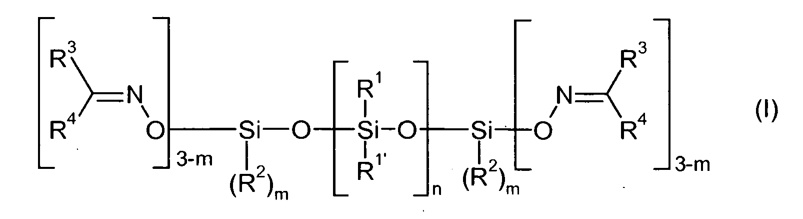 wobei
R¹ und R^{1'} unabhängig voneinander für einen, gegebenenfalls substituierten, Alkyl- oder Alkenyl- oder Arylrest, bevorzugt Methyl, steht;
R² unabhängig voneinander für einen, gegebenenfalls substituierten, Alkyl- oder Alkenyl- oder Arylrest, steht;
R³ und R⁴ unabhängig voneinander für einen Alkylrest stehen; n für Werte von 20 bis 3000, bevorzugt für Werte von 100 bis 1600, steht
und m entweder 0 oder 1 ist;
(b) mindestens ein Alkoxysilan der allgemeinen Formel (II)
(R⁵)ₚSi(OR⁶)₄₋ₚ (II)
wobei
R⁵ unabhängig voneinander für einen, gegebenenfalls substituierten, Alkyl- oder Alkenyl- oder Arylrest oder einen Rest der Formel -(R⁷-O)_{q}-R⁸,
mit R⁷ für Alkylen, insbesondere für ein C₂- bis C₄-Alkylen, und R⁸ für einen Alkylrest und q für einen Wert zwischen 1 und 5, bevorzugt für Methyl oder Vinyl, steht;
R⁶ unabhängig voneinander für H oder für einen Alkylrest steht, und p entweder 0 oder 1 ist.

2. Siliconzusammensetzung gemäss Anspruch 1, **dadurch gekennzeichnet, dass** das ketoximosilanterminierte Polydiorganosiloxan der allgemeinen Formel (I) erhältlich ist durch die Umsetzung
mindestens eines hydroxyterminierten Polydiorganosiloxans der allgemeinen Formel (III) 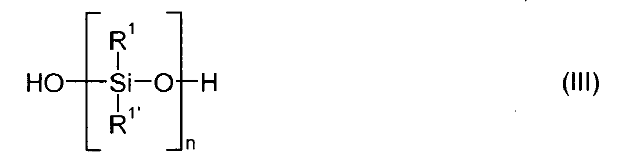 mit mindestens einem Ketoximosilan der allgemeinen Formel (IV).

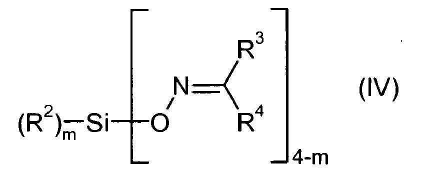

3. Siliconzusammensetzung gemäss einem der Ansprüche 1 oder 2, **dadurch gekennzeichnet, dass** R¹ = R^{1'}, insbesondere R¹ = R^{1'} = Methyl, ist.

4. Siliconzusammensetzung gemäss einem der vorhergehenden Ansprüche, **dadurch gekennzeichnet, dass** R² für Methyl oder für Vinyl oder für Phenyl steht.

5. Siliconzusammensetzung gemäss einem der vorhergehenden Ansprüche, **dadurch gekennzeichnet, dass** m = 0 ist.

6. Siliconzusammensetzung gemäss einem der vorhergehenden Ansprüche, **dadurch gekennzeichnet, dass** R³ für Methyl und R⁴ für Methyl oder Ethyl oder iso-Butyl, bevorzugt R³ = Methyl und R⁴ = Ethyl, steht.

7. Siliconzusammensetzung gemäss einem der vorhergehenden Ansprüche, **dadurch gekennzeichnet, dass** das Alkoxysilan der Formel (II) Vinyltrimethoxysilan oder Tetraethoxysilan oder eine Mischung davon ist.

8. Siliconzusammensetzung gemäss einem der vorhergehenden Ansprüche, **dadurch gekennzeichnet, dass** die Zusammensetzung einen Haftvermittler, insbesondere ein mit aminofunktionellen Gruppen substituiertes Alkoxysilan, enthält.

9. Siliconzusammensetzung gemäss einem der vorhergehenden Ansprüche, **dadurch gekennzeichnet, dass** die Siliconzusammensetzung neben mindestens einem ketoximosilanterminiertes Polydiorganosiloxan der allgemeinen Formel (I) und neben mindestens einem Alkoxysilan der allgemeinen Formel (II) weiterhin zusätzlich mindestens ein Weichmacher, mindestens einen Katalysator und mindestens einen Füllstoff enthält.

10. Verfahren zur Herstellung einer Siliconzusammensetzung gemäss einem der Ansprüche 1 bis 9, umfassend die Schritte
(a) Umsetzen mindestens eines hydroxyterminierten Polydiorganosiloxans der allgemeinen Formel (III) 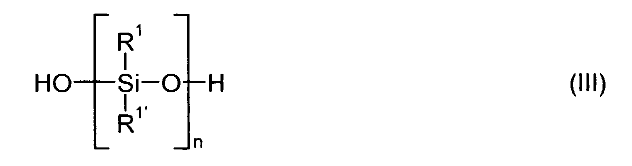 mit mindestens einem Ketoximosilan der allgemeinen Formel (IV) 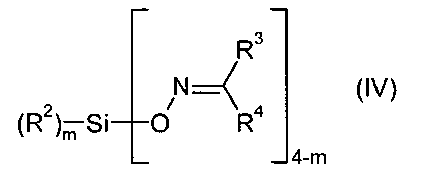
(b) Zugeben mindestens eines Alkoxysilans der allgemeinen Formel (II)
(R⁵)ₚSi(OR⁶)₄₋ₚ (II).

11. Verfahren nach Anspruch 10, **dadurch gekennzeichnet, dass** ein Weichmacher im Schritt (a) des Umsetzens eingesetzt wird.

12. Verfahren nach Anspruch 10 oder 11, **dadurch gekennzeichnet, dass** gleichzeitig mit oder nach Schritt (b) weitere Zusätze wie beispielsweise Katalysatoren, Füllstoffe, Rheologieregler oder Haftvermittler zugegeben werden.

13. Verfahren zum Abdichten umfassend die Schritte
- Applikation einer Siliconzusammensetzung gemäss einem der Ansprüche 1 bis 9 zwischen ein Substrat **S1** und ein Substrat **S2,**
- Aushärtung der Siliconzusammensetzung durch Kontakt mit Feuchtigkeit,
wobei die Substrate **S1** und **S2** gleich oder verschieden voneinander sind.

14. Verfahren gemäss Anspruch 13, **dadurch gekennzeichnet, dass** mindestens eines der Substrate **S1** oder **S2** Glas, Glaskeramik, Beton, Mörtel, Backstein, Ziegel, Keramik, Gips, ein Naturstein wie Granit oder Marmor; ein Metall oder eine Legierung wie Aluminium, Stahl, Buntmetall, verzinktes Metall; ein Holz, ein Kunststoff wie PVC, Polycarbonat, PMMA, Polyester, Epoxidharz; eine Pulverbeschichtung, Emaille, eine Farbe oder ein Lack, insbesondere ein Automobillack, ist.

15. Artikel umfassend mindestens eine mittels Feuchtigkeit ausgehärtete Siliconzusammensetzung nach einem der Ansprüche 1 bis 9.

## Claims

1. A silicone composition comprising
(a) at least one ketoximosilane-terminated polydiorganosiloxane of the general formula (I) 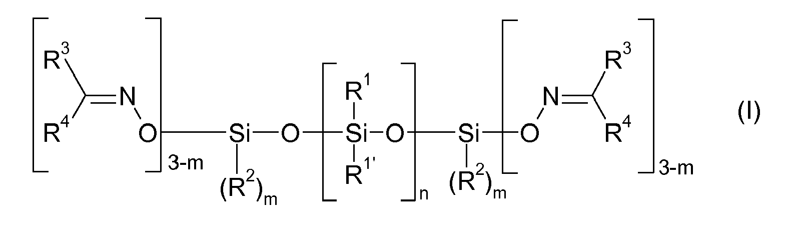 where
R¹ and R^{1'} independently are each an unsubstituted or substituted alkyl or alkenyl or aryl radical, preferably methyl; R² independently at each occurrence is an unsubstituted or substituted alkyl or alkenyl or aryl radical;
R³ and R⁴ independently are each an alkyl radical;
n stands for values from 20 to 3000, preferably for values from 100 to 1600;
and m is either 0 or 1;
(b) at least one alkoxysilane of the general formula (II)
(R⁵)ₚSi(OR⁶)₄₋ₚ (II)
where
R⁵ independently at each occurrence is an unsubstituted or substituted alkyl or alkenyl or aryl radical or a radical of the formula -(R⁷-O)_{q}-R⁸,
where R⁷ is alkylene, more particularly a C₂ to C₄ alkylene, and R⁸ is an alkyl radical, and q stands for a value between 1 and 5,
preferably methyl or vinyl;
R⁶ independently at each occurrence is H or is an alkyl radical, and p is either 0 or 1.

2. The silicone composition of claim 1, **characterized in that** the ketoximosilane-terminated polydiorganosiloxane of the general formula (I) is obtainable by reacting
at least one hydroxy-terminated polydiorganosiloxane of the general formula (III) 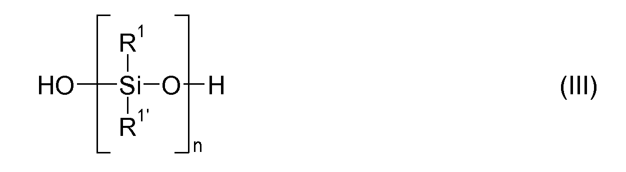 with at least one ketoximosilane of the general formula (IV)

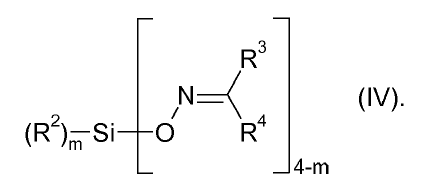

3. The silicone composition of either of claims 1 and 2, **characterized in that** R¹ = R^{1'}, more particularly R¹ = R^{1'} = methyl.

4. The silicone composition of any of the preceding claims, **characterized in that** R² is methyl or is vinyl or is phenyl.

5. The silicone composition of any of the preceding claims, **characterized in that** m = 0.

6. The silicone composition of any of the preceding claims, **characterized in that** R³ is methyl and R⁴ is methyl or ethyl or isobutyl, preferably R³ = methyl and R⁴ = ethyl.

7. The silicone composition of any of the preceding claims, **characterized in that** the alkoxysilane of the formula (II) is vinyltrimethoxysilane or tetraethoxysilane or a mixture thereof.

8. The silicone composition of any of the preceding claims, **characterized in that** the composition comprises an adhesion promoter, more particularly an alkoxysilane substituted by amino-functional groups.

9. The silicone composition of any of the preceding claims, **characterized in that** the silicone composition, besides at least one ketoximosilane-terminated polydiorganosiloxane of the general formula (I) and besides at least one alkoxysilane of the general formula (II), further comprises at least one plasticizer, at least one catalyst, and at least one filler.

10. A process for preparing a silicone composition of any of claims 1 to 9, comprising the steps of
(a) reacting at least one hydroxy-terminated polydiorganosiloxane of the general formula (III) 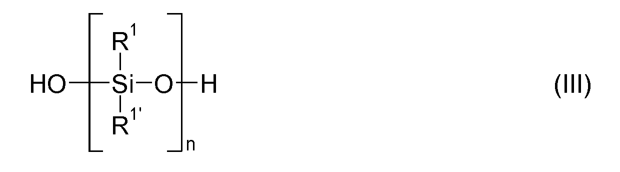 with at least one ketoximosilane of the general formula (IV) 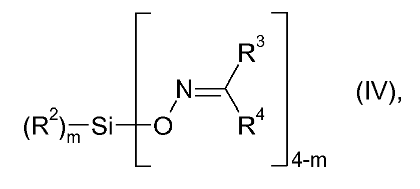
(b) adding at least one alkoxysilane of the general formula (II)
(R⁵)ₚSi(OR⁶)₄₋ₚ (II).

11. The process of claim 10, **characterized in that** a plasticizer is used in step (a) of reacting.

12. The process of claim 10 or 11, **characterized in that** further additives such as catalysts, fillers, rheology regulators or adhesion promoters, for example, are added simultaneously with or after step b).

13. A method of sealing, comprising the steps of
- applying a silicone composition of any of claims 1 to 9 between a substrate **S1** and a substrate **S2,**
- curing the silicone composition by contact with moisture,
substrates **S1** and **S2** being alike or different from one another.

14. The method of claim 13, **characterized in that** at least one of the substrates, **S1** or **S2,** is glass, glass ceramic, concrete, mortar, brick, tile, ceramic, plaster, a natural stone such as granite or marble; a metal or an alloy such as aluminum, steel, nonferrous metal, galvanized metal; a wood, plastics such as PVC, polycarbonate, PMMA, polyester, epoxy resin; a powdercoating, enamel, a paint or a finish, more particularly an automotive finish.

15. An article comprising at least one moisture-cured silicone composition of any of claims 1 to 9.

## Revendications

1. Composition de silicone contenant
(a) au moins un polydiorganosiloxane à terminaison cétoximosilane de formule générale (I) 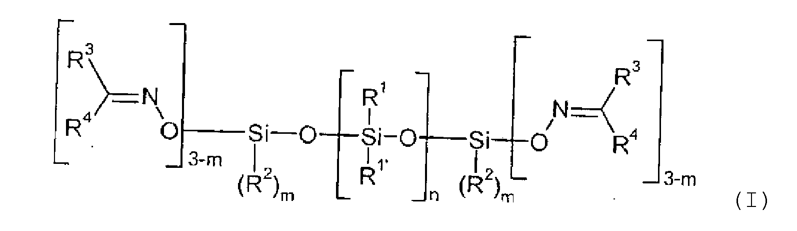 dans laquelle
R¹ et R^{1'} représentent chaque fois indépendamment un radical alkyle ou alcényle ou aryle, éventuellement substitué, de préférence méthyle ; R² représente, chaque fois indépendamment, un radical alkyle ou alcényle ou aryle, éventuellement substitué ;
R³ et R⁴ représentent chaque fois indépendamment un radical alkyle ;
n représente des valeurs de 20 à 3 000, de préférence des valeurs de 100 à 1 600,
et m est soit 0, soit 1 ;
(b) au moins un alcoxysilane de formule générale (II)
(R⁵)ₚSi(OR⁶)₄₋ₚ (II)
dans laquelle
R⁵ représente, chaque fois indépendamment, un radical alkyle ou alcényle ou aryle, éventuellement substitué, ou un radical de formule -(R⁷-O)_{q}-R⁸,
où R⁷ représente un groupe alkylène, en particulier un groupe alkylène en C₂-C₄, et
R⁸ représente un radical alkyle et q représente une valeur comprise entre 1 et 5,
de préférence le groupe méthyle ou vinyle ;
R⁶ représente chaque fois indépendamment H ou un radical alkyle,
et p est soit 0, soit 1.

2. Composition de silicone selon la revendication 1, **caractérisée en ce que** le polydiorganosiloxane à terminaison cétoximosilane de formule générale (I) peut être obtenu par mise en réaction
d'au moins un polydiorganosiloxane à terminaison hydroxy de formule générale (III) 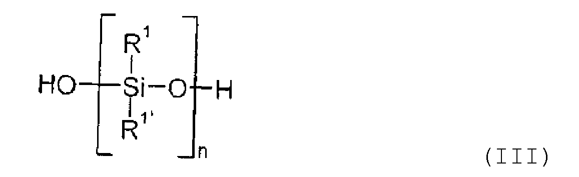 avec au moins un cétoximosilane de formule générale (IV)

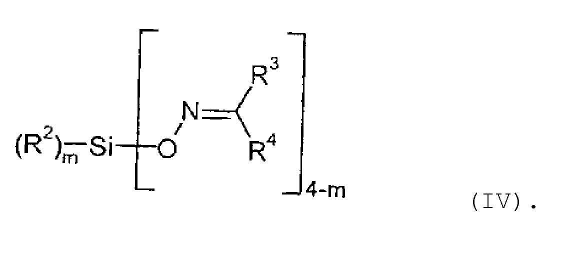

3. Composition de silicone selon la revendication 1 ou 2, **caractérisée en ce que** R¹ - R^{1'}, en particulier R¹ = R^{1'} = méthyle.

4. Composition de silicone selon l'une quelconque des revendications précédentes, **caractérisée en ce que** R² représente le groupe méthyle ou vinyle ou phényle.

5. Composition de silicone selon l'une quelconque des revendications précédentes, **caractérisée en ce que** m = 0.

6. Composition de silicone selon l'une quelconque des revendications précédentes, **caractérisée en ce que** R³ représente le groupe méthyle et R⁴ représente le groupe méthyle ou éthyle ou isobutyle, de préférence R³ représente le groupe méthyle est R⁴ représente le groupe éthyle.

7. Composition de silicone selon l'une quelconque des revendications précédentes, **caractérisée en ce que** l'alcoxysilane de formule (II) est le vinyltriméthoxysilane ou le tétraéthoxysilane ou un mélange de ceux-ci.

8. Composition de silicone selon l'une quelconque des revendications précédentes, **caractérisée en ce que** la composition contient un promoteur d'adhérence, en particulier un alcoxysilane substitué par des groupes amino-fonctionnels.

9. Composition de silicone selon l'une quelconque des revendications précédentes, **caractérisée en ce qu'**outre au moins un polydiorganosiloxane à terminaison cétoximosilane de formule générale (I) et outre au moins un alcoxysilane de formule générale (II) la composition de silicone contient encore au moins un plastifiant, au moins un catalyseur et au moins une charge.

10. Procédé pour la préparation d'une composition de silicone selon l'une quelconque des revendications 1 à 9, comprenant les étapes
(a) mise en réaction d'au moins un polydiorganosiloxane à terminaison hydroxy de formule générale (III) 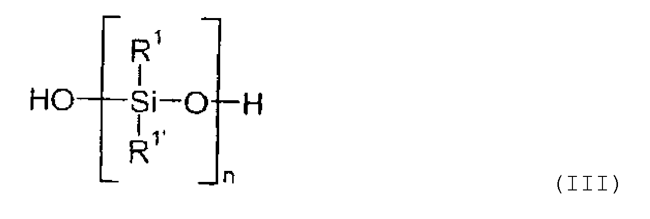 avec au moins un cétoximosilane de formule générale (IV) 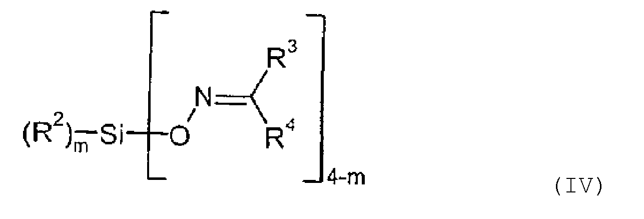
(b) addition d'au moins un alcoxysilane de formule générale (II)
(R⁵)ₚSi(OR⁶)₄₋ₚ (II).

11. Procédé selon la revendication 10, **caractérisé en ce que** dans l'étape (a) de la réaction on utilise un plastifiant.

12. Procédé selon la revendication 10 ou 11, **caractérisé en ce qu'**en même temps que ou après l'étape (b) on ajoute d'autres additifs, comme par exemple des catalyseurs, des charges, des régulateurs de rhéologie ou des promoteurs d'adhérence.

13. Procédé pour l'étanchéification, comprenant les étapes
- application d'une composition de silicone selon l'une quelconque des revendications 1 à 9 entre un support **S1** et un support **S2,**
- durcissement de la composition de silicone par contact avec de l'humidité,
les supports **S1** et **S2** étant identiques ou différents l'un de l'autre.

14. Procédé selon la revendication 13, **caractérisé en ce qu'**au moins l'un des supports **S1** ou **S2** est le verre, la vitrocéramique, le béton, le mortier, la brique, une tuile, la céramique, le plâtre, une pierre naturelle telle que le granite ou le marbre ; un métal ou un alliage tel que l'aluminium, l'acier, un métal non ferreux, un métal galvanisé ; un bois, une matière plastique telle que le PVC, le polycarbonate, le PMMA, le polyester ; une résine époxy ; un revêtement en poudre, l'émail ; une peinture ou une laque, en particulier une laque pour automobile.

15. Article comprenant au moins une composition de silicone durcie par l'humidité, selon l'une quelconque des revendications 1 à 9.
